# EUROPEAN PATENT APPLICATION

(11) **EP 2 819 380 A1**
(43) Date of publication of application: **31.12.2014**
(21) Application number: 13305919.6
(22) Date of filing: 28.06.2013
(51) Int. Cl.: H04L 29/08, H04W 4/20, G06F 11/32, G06F 11/07, H04L 29/14

(54) **Method for analyzing a status light of a device, application and mobile computer for performing the method**

(71) Applicant: Thomson Licensing, 92130 Issy-les-Moulineaux (FR)
(72) Inventor: Aerts, Steven, 2547 Lint (BE); Similon, Andie, 2650 Edegem (BE)
(74) Representative: Arnold, Klaus-Peter

(57) **Abstract**

The method for for analyzing a status light of a device comprises the steps of: starting an application on a mobile computer by a user (10), which mobile computer comprises a display, the application starting a camera function of the mobile computer (12), the application or the user triggering the camera to take one or a sequence of pictures of the status light, (20), and the application analyzing said one or several pictures (22), and presenting a result of the analysis about an operating status of the device on the display (24) and/or sending status information data of the device to a service person or to a service provider.

## Description

### TECHNICAL FIELD

The invention relates to the field of customer devices, in particular to residential gateways operating via a broadband connection with a service provider network.

### BACKGROUND OF THE INVENTION

Residential gateways are widely used to connect devices in a home of a customer to the Internet or any other wide area network (WAN). Residential gateways use in particular a digital subscriber line (DSL) technology that enables a high data rate transmission over copper lines or optical fiber transmission systems. A generic residential gateway includes typically a microprocessor, a non-volatile memory, in which an operating system with software modules and applications is stored, and a volatile memory for the operation of the residential gateway. The operating system of the residential gateway is for example a LINUX operating system and a gateway-specific middleware, which represents an execution environment for the applications. The software modules provide in particular a DSL modem function, a cable or an optical modem function, gateway and switching functions, a wireless (Wi-Fi) function, FXS functions, VoIP functionality, and others.

Residential gateways have status lights that can be used to solve installation and connection problems. The following status lights are commonly used for a residential gateway to indicate the status of the residential gateway: A power light, an Ethernet light, a wireless light, a DSL light and/or an Internet light. After a residential gateway is powered on, it first performs a "Power On Self Test" (POST). When the residential gateway completes this test, then the power light is on with a steady green light. If the gateway cannot establish a normal operation after POST, then any error with the residential gateway or the broadband connection has occurred, which will be indicated by the status lights. An example is given for a 2Wire 2701 Gateway in the following table, published under the Internet address: http://www.dslreports.com/faq/13945, which shows what can be indicated by the status lights of a gateway:

| Modem Light state | Unlit | Flashing Red | Steady Red | Flashing Orange | Flashing Green slow | Flashing Green fast | Steady Green |
|---|---|---|---|---|---|---|---|
| Power Light | Gateway has no power | Not Applicable | System Error Contact Tech Support | Gateway Undergoing a Software Upgrade | Gateway Undergoing POST | Not Applicable | Gateway is ready for Service |
| Ethernet Light | Gateway is off or no devices connected | Not Applicable | Not Applicable | Not Applicable | Not Applicable | Data Traffic Lan/Wan | Devices Connected to Gateway |
| Wireless Light | Gateway is off or no devices connected | Not Applicable | Not Applicable | Not Applicable | Not Applicable | Data Traffic WLan/Wan | Devices Connected to Gateway |
| DSL Light | Gateway is off or booting up | Not Applicable | Gateway is unable to establish sync | Not Applicable | Gateway is attempting to establish sync | Not Applicable | Gateway has established sync |
| Internet Light | Gateway is unable to detect a DSL signal | Not Applicable | Gateway is unable to initiate a PPPoE session | Not Applicable | Not Applicable | Gateway initiating a PPPoE session | Gateway has established a PPPoE session |

US 2006/016384 describes a method and a system for permitting diagnostics in a PC. Signals, imperceptible to a user, are transmitted through an LED used to indicate an on/off power status of the PC. A small hand-held device is used for detecting and interpreting the LED signals and to provide a visual indication for the user of a particular problem of the PC.

### SUMMARY OF THE INVENTION

The method for analyzing a status light of a device, or of several status lights of the device, comprises the steps of: starting an application on a mobile computer by a user, the mobile computer comprising a display, the application starting a camera function of the mobile computer, , the application triggering the camera to take one, or a sequence of pictures of the status light, and the application analyzing said one or sequence of pictures, and presenting a result of the analysis about an operating status of the device on the display of the mobile computer and/or sending status information of the device to a service person or to a service provider.

In a first preferred embodiment, the mobile computer comprises a camera, and the method comprises the steps of: starting an application on the mobile computer by a user, the application starting a camera function of the mobile computer, the user pointing the mobile computer with the camera to the status light, the application indicating to the user that the application is ready for picture taking, the user operating a button on the mobile computer to start picture taking, the application triggering the camera to take one or several pictures of the status light, and the application analyzing said one or several pictures and presenting a result of the analysis about an operating status of the device on the display of the mobile computer and/or sending status information of the device to a service person or to a service provider.

In a second preferred embodiment, the method comprises the steps of:
starting an application on a mobile computer by a user, the mobile computer comprising a camera and a display,
the application starting a camera function of the mobile computer,
the user pointing the mobile computer with the camera to the status light,
the application indicating to the user that the application is ready for picture taking,
the user operating a button on the mobile computer to start picture taking,
the user operating a button on the device to start a data transmission via the status light,
the application triggering the camera to take a sequence of pictures of the status light,
the application analyzing the pictures, and
the application sending status information data of the device, as obtained from the analysis of the pictures, to a service person or to a service provider via a mobile phone function of the mobile computer.

The mobile computer is advantageously a smartphone or a tablet computer comprising a camera and a display. Alternatively, a mobile computer may be used not including a camera, e.g. a notebook, and the user may transmit the picture or the sequence of pictures via a web cam to the mobile computer. The application for performing the method may be provided by the manufacturer of the mobile computer or may have been installed by the user. The application may be provided to the user for example by a computer readable device, on which the application is stored.

### BRIEF DESCRIPTION OF THE DRAWINGS

Preferred embodiments of the invention are explained in more detail below by way of example with reference to schematic drawings, which show:
- Fig. 1: a residential gateway and a smartphone for analyzing status lights of the residential gateway,
- Fig. 2: a flowchart for illustrating a method for analyzing status lights of the residential gateway and for displaying status information of the residential gateway on a display of the smartphone, and
- Fig. 3: a flowchart for illustrating a method for analyzing status lights of the residential gateway and for sending status information of the residential gateway to a network service provider.

### DETAILED DESCRIPTION OF PREFERRED EMBODIMENTS

It is to be understood that the figures and the description of the present invention have been simplified to illustrate elements that are relevant for a clear understanding of the present invention, while eliminating, for purposes of clarity, many other elements found in typical telecommunication end-devices, e.g. CPE devices, or home appliances. However, because such elements are well known in the art, a detailed discussion of such elements is not provided herein.

With regard to the figures, a telecommunication end-device adapted for connecting with a service provider network via a broadband connection for providing Internet services is described. For purposes of explanation, numerous specific details are set forth in order to provide a thorough understanding of preferred embodiments. It will be evident, however, to one skilled in the art that the present invention may be practiced without these specific details.

The telecommunications end device is, for example, a residential gateway or a media gateway, a router, a switch or a set-top box, and includes in a preferred embodiment a microprocessor, a non-volatile memory, in which an operating system and applications are stored, and a volatile memory for the operation of the apparatus. The operating system of the apparatus is, for example, a LINUX operating system and a device-specific middleware, which represents a device execution environment. The device execution environment includes software components for providing in particular a DSL modem function, gateway and switching functions, FXS functions, VoIP functionality and Wi-Fi operation.

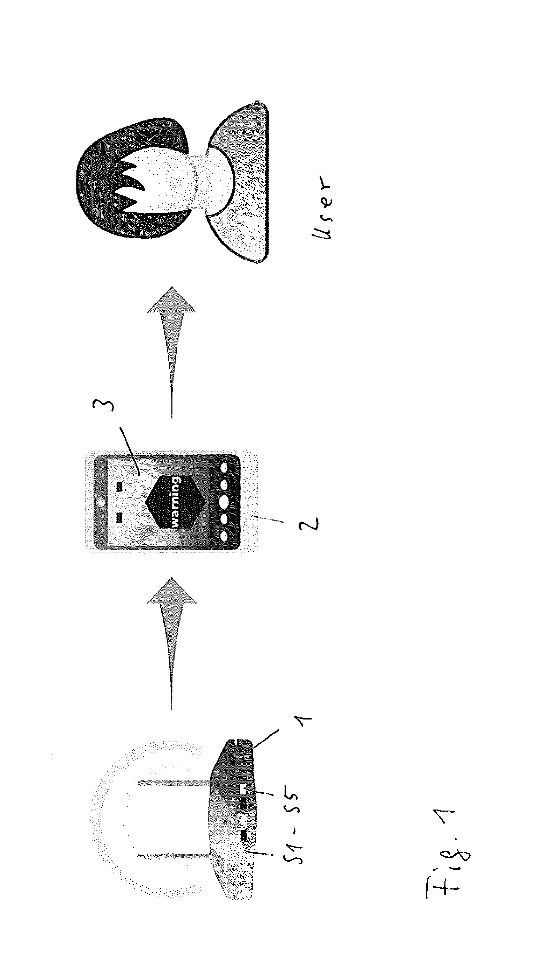

In figure 1 a residential gateway 1 is shown for providing Internet services for a user, as known from prior art. The residential gateway 1 is coupled, for example via a digital subscriber line, with a network of a network service provider (NSP). The residential gateway 1 includes status lights S1-S5 at the front for indicating the status of the residential gateway 1 during operation, for example a power light, a light for Wi-Fi connection, a DSL light, an Internet light and an Ethernet light. According to the operation of the residential gateway 1, the status lights S1-S5 can be on, off, or flashing and may use different colors.

According to the invention, an application for a smartphone 2 or any other mobile computing device (mobile computer) of the user is provided, for example by the manufacturer of the residential gateway 1, which allows the user to analyze the status lights S1-S5 to give the user a detailed information about the operating status of the residential gateway 1, e.g. in text form or by a graphical representation. The smartphone 2 has a high resolution camera and enough processing power to perform an image or video analysis of the pictures taken by the camera. The smartphone 2 is also a communication device which makes it possible to send the result of the analysis to any interested party, for example to the NSP or to the manufacturer of the residential gateway 1.

When the user experiences a problem with the residential gateway 1, for example in case of a loss of the DSL connection, the user can take his smartphone 2 and record a picture sequence of the status lights S1-S5. The application will analyze in a further step the recorded picture sequence of the status lights S1-S5 and look up the respective information with regard to this error situation in a data base. The data base can be a part of the application or can be an online data base, which can be contacted by the smartphone 2 via its data transmission mode, e.g. its 3G packet transmission mode. The respective information with regard to the status of the residential gateway 1 is then displayed to the user on a display 3 of the smartphone 2, for example the message: "Please check the DSL cable to the modem". In addition, it is also possible to send the error analysis as a feedback to the helpdesk of the NSP, which may provide further details about the problems of the residential gateway 1.

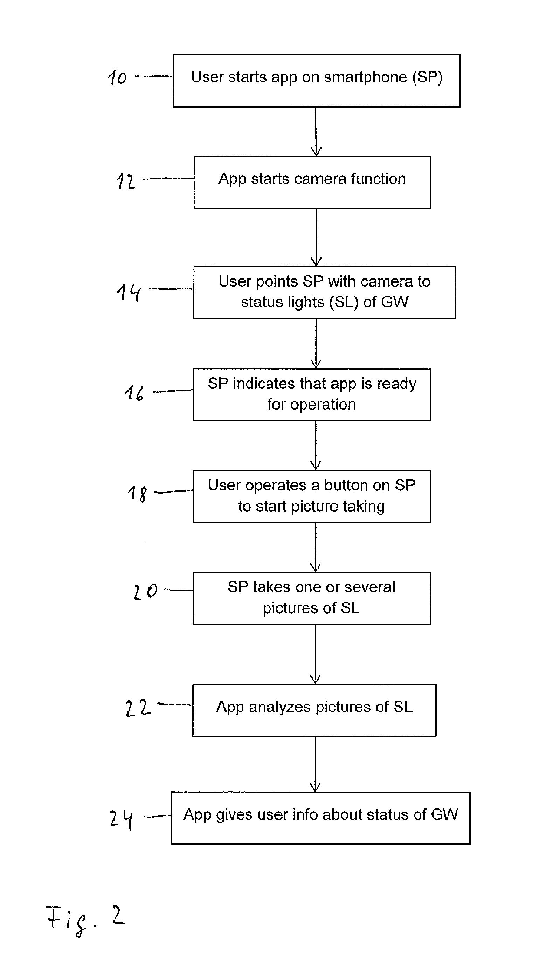

The method for analyzing the status lights S1-S5 of the residential gateway 1 is explained now in more detail with regard to a flow chart shown in figure 2: In case the user wants to analyze the status lights S1-S5 of his residential gateway 1, he starts the analyzing application on his smartphone 2, step 10. The application then starts the camera function of the smartphone, step 12. The user then points the smartphone with the camera to the status lights S1-S5 of the gateway, step 14. The application then may recognize automatically the status lights S1-S5, or the user may operate a button on the touchscreen of the smartphone to trigger the application that the status lights S1-S5 should now be analyzed, step 18. Optionally, the application may indicate to the user on the display 3 of the smartphone, after step 14 and before step 18: Ready for operation, step 16.

The application then triggers the camera to take one or pictures of the status lights S1-S5, step 20. In a further step, the application analyzes the pictures as taken by the camera of the smartphone and gives the user respective information about the status of the gateway on the display 3, step 22. The user therefore does not have to look for the meaning of the status lights in the user manual of the residential gateway 1. This in particular encourages also the user to try to self-diagnose the problem of the residential gateway 1, because he just has to point his smartphone 2 towards the residential gateway 1 and wait, until the problem of the residential gateway 1 is described on the display 3 of the smartphone 2.

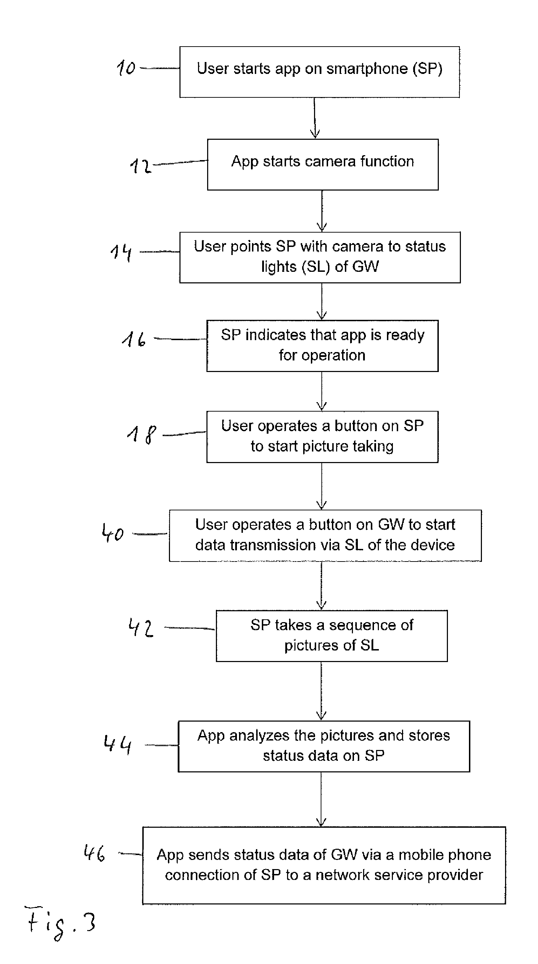

In case of more serious problems of the residential gateway 1, the application may send detailed information of the residential gateway 1 via the smartphone 2 to the NSP or to the manufacturer of the residential gateway 1, for example may send configuration data, an entire stack dump of a failing application, or even a partial system dump of the residential gateway 1. This method is described now with regard to figure 3: The user of the residential gateway 1 starts an analyzing application on his smartphone 2, step 10. The application then starts the camera function of the smartphone, step 12, and the user points the smartphone with the camera to the status lights S1-S5 of the gateway, step 14. The application indicates for the user on the display 3 of the smartphone or via its loudspeakers, step 16: Ready for operation.

The user then operates a specific button on the residential gateway 1 to send software information or configuration data via the status lights S1-S5, step 40. The residential gateway 1 then transmits the requested data to the smartphone 2 by using the LED lights of the status lights L1-L5 for a digital data transmission of the requested information, and at the same time, the camera of the smartphone 2 takes pictures with a sufficiently large repetition rate during this time period to capture the information of the status lights S1-S5 of the residential gateway 1, step 42. When the data transmission of the status lights S1-S5 has finished, the camera of the smartphone 2 stops operation, and the application stores the received information on the smartphone 2, step 44. The status data or configuration data can be retrieved from the pictures for example by analyzing the pictures by a picture processing program included in the application, which is sensitive to the colors of the status lights S1-S4. Then, the application sends the stored data via the mobile phone connection of the smartphone 2 to the NSP, to the manufacturer of the smartphone 2 or to any other Internet service provider, step 46. For example, the stored data may be sent as an attachment via email to the NSP. The NSP can analyze then the received information in detail. In addition, the application may also analyze the received data and present results of the analysis on the display 3 for the user. In a further step, the NSP informs the user about the problems of the residential gateway 1 and how to solve it.

With this method, it is therefore possible to avoid lengthy telephone discussions with a helpdesk of the NSP or an inspection of a service person in the home of the user. The invention requires only minor modifications of the residential gateway 1 for the embodiment with regard to Fig. 3: software modifications, a means, e.g. a button on the residential gateway 1 and/or a software function which can be triggered via the smartphone 2 or a PC for sending of the status data, and a signal interface via which the requested status data can be coupled from a software bus of the residential gateway 1 to the power lines of the status lights S1-S5. With regard to the embodiment of Fig. 2, no modification of the residential gateway 1 is necessary.

The invention is in particular useful for a residential gateway 1, but may be applied also to any other telecommunication end device and for home appliances of the user, for example to dishwashers or washing machines. The power supply for the LEDs of the status lights S1-S5 can be designed such that a higher data rate can be transmitted, so that within a short time, e.g. a few seconds, some kilobytes of information can be transmitted. The status lights S1-S5 can be used in particular in parallel with a synchronized clock cycle to increase the data transmission rate. The camera of the smartphone 2 has to operate with a correspondingly high repetition rate, e.g. by using a reduced resolution of the camera, to capture all data as transmitted by the status lights S1-S5. A repetition rate in the kilohertz region of the camera shutter therefore should be possible with a MOSFET camera sensor utilizing an electronic shutter. The status lights S1-S5 may use a binary on/off format, or may use a multitude of intensity steps and/or different colors to provide a higher data transmission rate. A comparatively high data rate with a still acceptable blinking repetition rate can be obtained therefore with the status lights S1-S5, being much higher than a human eye could recognize. This has the advantage that the operating status of the residential gateway 1 can be analyzed by the NSP remotely, even in case the DSL connection of the residential gateway 1 is not working.

Also other embodiments of the invention may be utilized by one skilled in the art without departing from the scope of the present invention. The invention is in particular not limited to residential gateways and may be used advantageously also for all kinds of other CPE devices, e.g. routers, switches, telephones and set-top boxes, also with home appliances. The invention resides therefore in the claims herein after appended.

## Claims

1. Method for analyzing a status light (S1-S5) of a device (1), comprising the steps of
starting an application on a mobile computer by a user (10), which mobile computer comprises a display,
the application starting a camera function of the mobile computer (12),
take one or a sequence of pictures of the status light (S1-S5), (20, 42), and
the application analyzing said one or sequence of pictures (22, 44), and
presenting a result of the analysis about an operating status of the device on the display (24) and/or sending status information data of the device to a service person or to a service provider (46).

2. The method of claim 1, wherein the mobile computer comprises a camera, and the method comprises the steps of
the user pointing the mobile computer with the camera to the status light (14),
the application indicating to the user that the application is ready for picture taking (16), , and
the user operating a button on the mobile computer to start picture taking (18).

3. The method of claim 1 or 2, wherein the mobile computer comprises a mobile phone function for sending the status information data via a mobile phone connection to the service person or a network service provider.

4. The method of claim 1, wherein the mobile computer comprises a camera, and the method comprises the steps of
the user pointing the mobile computer with the camera to the status light (14),
the application indicating to the user that the application is ready for picture taking (16), ,
the user operating a button on the mobile computer to start picture taking (18),
the user operating a button on the device to start a data transmission via the status light,
the application triggering the camera to take a sequence of pictures of the status light,
the application analyzing the pictures, and
the application sending the status information data of the device, as obtained from the analysis of the pictures, to a service person or to a service provider via a mobile phone function of the mobile computer.

5. Method for analyzing a status light (S1-S5) of a device (1), comprising the steps of
starting an application on a mobile computer by a user (10), the mobile computer comprising a camera and a display,
the application starting a camera function of the mobile computer (12),
the user pointing the mobile computer with the camera to the status light (14),
the application indicating to the user that the application is ready for picture taking (16),
the user operating a button on the mobile computer to start picture taking (18),
the user operating a button on the device to start a data transmission via the status light (40),
the application taking a sequence of pictures of the status light with the camera (42),
the application analyzing the pictures (44), and
the application sending status information data or configuration data of the device, as obtained from the analysis of the pictures, to a service person or to a service provider via a mobile phone function of the mobile computer (46).

6. The method of one of the preceding claims, wherein the device is a home appliance or a telecommunication end-device.

7. The method of claim 6, wherein the telecommunication end-device is a CPE device, and wherein the service provider is a network service provider for the CPE device.

8. The method of claim 7, wherein the CPE device is a residential gateway or a media gateway, a router, an Ethernet switch or a set-top box comprising status lights (S1-S5).

9. The method of one of the preceding claims, wherein the mobile computer is a smartphone or a tablet computer.

10. Application comprising software instructions for performing a method according to one of the preceding claims.

11. Computer readable device storing an application according to claim 10.

12. Mobile computer comprising a camera, a display and an application for performing a method according to one of the preceding claims 1 - 9.

13. The mobile computer of claim 12, wherein the mobile computer is a smartphone or a tablet computer.

14. CPE device comprising a driver for status lights (S1-S5) for performing a method according to one of the preceding claims 5 - 9.

15. The CPE device of claim 14, comprising a button and/or a software function which can be triggered via a mobile computer or a PC for sending of status data of the CPE device, and a signal interface via which requested status data can be coupled from a software bus of the CPE device to power lines of the status lights (S1-S5).
